# EUROPÄISCHE PATENTSCHRIFT

(11) **EP 1 395 767 B1**
(45) Veröffentlichungstag und Bekanntmachung des Hinweises auf die Patenterteilung: **28.03.2007**
(21) Anmeldenummer: 02778871.0
(22) Anmeldetag: 26.02.2002
(51) Int. Cl.: F16J 15/10, B29B 15/12

(54) **FLACHDICHTUNG UND VERFAHREN ZU IHRER HERSTELLUNG**
FLAT PACKING AND METHOD FOR THE PRODUCTION THEREOF
GARNITURE D'ETANCHEITE PLATE ET PROCEDE PERMETTANT DE LA PRODUIRE

(30) Priorität: 13.06.2001 DE 10128346
(43) Veröffentlichungstag der Anmeldung: 10.03.2004
(73) Patentinhaber: Carl Freudenberg KG, 69469 Weinheim (DE)
(72) Erfinder: KOSACK, Steffen, 67454 Hassloch (DE); KLENK, Thomas, 69214 Eppelheim (DE); LIEDTKE, Ulrich, 69514 Laudenbach (DE); SCHULTZ, Frank, 68163 Mannheim (DE)
(86) Internationale Anmeldenummer: PCT/EP2002/002018
(87) Internationale Veröffentlichungsnummer: WO 2002/101267

(56) Entgegenhaltungen:
- WO-A-92/18578
- DD-A- 140 019
- FR-A- 1 495 195
- PATENT ABSTRACTS OF JAPAN vol. 010, no. 109 (M-472), 23. April 1986 (1986-04-23) & JP 60 240436 A (MATSUSHITA DENKO KK), 29. November 1985 (1985-11-29)
- PATENT ABSTRACTS OF JAPAN vol. 006, no. 106 (M-213), 10. Mai 1983 (1983-05-10) & JP 58 028056 A (NIHON PIRAA KOGYO KK), 18. Februar 1983 (1983-02-18)

## Beschreibung

Die Erfindung befasst sich mit einer Flachdichtung aus einem mit einem Wirkstoff, insbesondere Polytetrafluorethylen (PTFE), getränkten Vliesstoff als Dichtelement sowie einem Verfahren zur Herstellung einer solchen Flachdichtung.

Für Flanschverbindungen für den Einsatz in der (petro-)chemischen Industrien beziehungsweise für energie- und verfahrenstechnische Anlagen werden häufig Flachdichtungen aus gummigebundenen Werkstoffen sowie aus gepreßten Platten aus gepreßter Folie flexiblen Graphits verwendet.

Als Füllstoffe werden dann meist Faserwerkstoffe, mineralische Zusatzstoffe zusätzlich Graphit, Kohle, Metall- und Metalleinlagen oder entsprechende Kombinationen daraus verwendet. Die Faserwerkstoffe können auch mit speziellen Imprägnierungen versehen sein.

Bei Flachdichtungen, bei denen eine äußerst hohe chemische Beständigkeit in Kombination mit guten Abdicht- und mechanischen Werkstoffeigenschaften bei hohen Temperaturen gefordert wird, hat sich PTFE als Werkstoff etabliert.

Durch die DE-A 44 19 007 ist es bekannt, Flachdichtungen aus mindestens einem Vliesstoff-Prepreg zu asbestfreien Fasern oder Fasergemischen mit asbestfreien Fasern oder Fasergemischen mit vorvernetzbaren Lösungen, Dispersionen oder Suspensionen einer reaktiven Polymermischung getränkt, durch Trocknung bei erhöhter Temperatur vorvemetzt und gegebenenfalls mit Kunststoff- oder Metallfolien zusammenlaminiert werden.

Aus dem Dokument EP-B 654 625 sind Flachdichtungen bekannt, die aus mikroporösen, verstreckten PTFE bestehen und wenigstens teilweise mit einem lösungsmittelresistenten Kunststofflack versehen sind.

Dokument US-A 5,997,008 beschreibt einen Dichtring, der aus einem gewellten Metallring besteht und der mindestens auf einer Seite eine nichtmetallische Beschichtung mit einem geringen Reibungskoeffizienten beispielsweise aus PTFE als Mikrodichtungsschicht aufweist.

Aus dem Dokument DD-A-140 019 ist ein Verfahren zur Herstellung von Verbundwerkstoffen durch Imprägnierung von Flächengebilden aus anorganischen Faserstoffen mit Dispersionen von funktionalisiertem Polytetrafluorethylen (PTFE) bekannt. Dadurch sollen Delaminierungserscheinungen beim Weiterverarbeitungsprozeß zu Leiterplatten vermieden werden.

Der Erfindung liegt die Aufgabe zugrunde, eine Flachdichtung zu schaffen, die ein hohes Abdichtverhalten in Verbindung mit einem besonders guten mechanischen Werkstoff- und Temperaturverhalten bei bester chemischer Beständigkeit aufweist.

Erfindungsgemäß wird die Aufgabe durch das Verfahren zur Herstellung einer gattungsgemäß angegebenen Flachdichtung mit den in Anspruch 1 angegebenen Merkmalen gelöst.

Weitere vorteilhafte Ausgestaltungen der Erfindung sind in den Ansprüchen 2 bis 13 dargelegt.

Ausgangspunkt für die Herstellung sind dabei mechanisch gebundene Vliesstoffe mit wirrer bzw. randomartiger Faserstruktur. Dabei ist insbesondere die überwiegende mechanische Bindung des Vlieses von Bedeutung, da eine chemische Bindung sich beim späteren Einsatz bei hohen Temperaturen verflüchtigen kann und damit zu ungenügendem Zusammenhalt führt oder beispielsweise beim späteren Einsatz als Abdichtung in Rohrleitungssystemen der chemischen Industrie zu ungenügender chemischer Beständigkeit führt. Die gute mechanische Stützwirkung sowie Offenheit und Porosität basiert hierbei auf der Faserlänge, die in einem Längenbereich zwischen 3 bis 20 mm liegen können. Das Flächengewicht der Vliese beträgt hierbei rd. 20 bis 500 g/m². Die kurze Faserlänge führt hierbei zu einer starken Porosität, was für die spätere Imprägnierung von Vorteil ist.

Aufgrund der guten Temperatur- und chemischen Beständigkeit und der hervorragenden mechanischen Festigkeit werden vorwiegend mechanisch gebundene Aramidvliese verwendet, wobei aber auch Vliese aus anderen Fasern und Fasermischungen z.B. aus Polyimid (PI), Polybenzinidazol (PBI), Polyester (PES), Glasfasern (GF), Aramidfasem (AF) oder Basaltfasern je nach Anwendung eingesetzt werden können. Die Bindung des Vliesstoffes erfolgt mechanisch z.B. durch Wasserstrahlverfestigung oder Nadeln. Die mechanische Verfestigung ist insofern von Bedeutung, da sie im Gegensatz zu einer chemischen Bindung eine hohe Stabilität auch bei hohen Temperaturen hat. Die Vliesstoffbahn selbst hat eine Dicke <= 5 mm, vorzugsweise von 1 bis 2,5 mm.

Der große Vorteil der Imprägnierung von Vliesen gegenüber z.B. dem auch bekannten Imprägnieren von Geweben besteht darin, daß in Vliesen, im Vergleich zu Geweben bei denen die Fasern gebündelt sind, die Fasern vereinzelt und gut verteilt vorliegen und so jede Faser mit Imprägnierung umhüllt wird, wohingegen bei Geweben oder Geflechtbahnen die Imprägnierung nur außen aufliegt was zu einer wesentlich schlechteren Dichtheit besonders Gasdichtheit führt.

Die Erfindung betrifft auch eine nach dem geschilderten Verfahren hergestellte Flachdichtung gemäß Anspruch 14 .

Die quasi-konfinuerliche Imprägnierung des Vliesstoffes mit beispielsweise einer 50 bis 60 Gew.% PTFE, 3 bis 5 Gew.% Alkylphenolethoxylat, < 0,2 Gew.% Ammoniumpentadecafluoroctanoat und Rest demineralisiertes Wasser enthaltenden PTFE-Dispersion erfolgt, in dem die Vliesbahnen automatisch durch ein Imprägnierbad mit einer Geschwindigkeit von rd. 0,1 - 5 m/min gezogen werden. Die Verweildauer im Imprägnierbad ist abhängig vom gewünschten Imprägniergrad und dem eingesetzten Wirkstoff. Als Imprägnierung werden vorwiegend reine wäßrige PTFE-Dispersion oder Gemische aus wässriger PTFE-Dispersion mit mineralischen Füllstoffen eingesetzt, die beispielsweise bis zu 50 Gew.% Graphit, Talkum. Glimmer oder Molybdändisulfid bezogen auf die Trockenmasse an PTFE als anorganischen Füllstoff und übliche Dispergierhilfsmittel enthalten. Dabei kann das Imprägnierbad je nach verwendeter Imprãgniermischung umgewälzt werden, z.B. mit einem Rührer oder durch Pumpen, um immer eine gleichmäßige Mischung im Imprägnierbad sicherzustellen. Dadurch ist sichergestellt, daß die entsprechende Vliesbahn bis zum maximalen Sättigungsgrad getränkt werden kann (bis ungefähr 95-98% Wirkstoffanteil). In Fällen, in denen z.B. aus Gründen der Standfestigkeit gegenüber der Abdichteigenschaft ein höherer Faseranteil in der späteren Dichtung erwünscht ist, wird in einer nachgeschalteten Abstreifstrecke zwischen 2 Walzen wieder teilweise Imprägnierung aus dem Vlies herausgedrückt. Dies auch um eine besonders gute Verteilung des Wirkstoffs in der Vliesstoffbahn zu erreichen. Hierzu beträgt der Walzenspalt zwischen rd. 50 % der Ausgangsvliesdicke und maximaler Preprägdicke.

Um das Austropfen der Imprägnierung zu vermeiden wird bevorzugt die Trocknung der imprägnierten Vliesstoffbahn in einem Durchlaufofen bei einer Temperatur von etwa 30 bis 300 °C durchgeführt.

Hierbei werden die Dispersions- sowie weitere flüchtige Imprägnierungssubstanzen so entfernt, daß das imprägnierte Vlies nun ausschließlich einen festen homogenen Faserverbund darstellt, der ausschließlich aus den hochwertigen Fasern des Vlieses und der PTFE-Wirkstoffkombination besteht und so bereits auch ohne Sintervorgang eine chemisch und mechanisch sehr stabile Flachdichtung darstellt, die aufgrund der geringen Verdichtung insbesondere für Anwendungen geeignet ist, bei der z.B. zur Anpassung an Dichtstellen mit großer Oberflächenrauhigkeit oder z.B. bei emaillierten Flanschen oder Glasflanschen usw. eine starke Verformung der Dichtung, d.h. eine noch äußerst flexible Dichtung benötigt wird.

Für Anwendungsfälle bei denen eine höhere Dichtheit bzw. Gasdichtheit sowie Standfestigkeit der zu verwendenden Flanschdichtungen benötigt ist, wird die PTFE-Vlies-Dichtungsbahn in einem weiteren Fertigungsschritt in einem kontinuierlichen Walz- bzw. Laminiervorgang mit Hilfe umlaufender innerlich elektrisch beheizter Stahlwalzen einer Temperatur- und Druckbehandlung unterworfen, was auf der einen Seite zu einer deutlichen Verdichtung der PTFE-Vlies-Dichtungsbahn führt und gleichzeitig aufgrund der Streichwirkung der Walzen mit einer Oberflächenrauhigkeit von Rz <= 6 µm unter gleichzeitiger Temperatureinbringung bis zu 300 °C zu einer deutlichen Oberflächenglättung und Verdichtung der Vliesbahn führt (Glätten bzw. Glattstreichen und Verkleben der PTFE-Flocken auf der Oberfläche, Ansintern) was zu einer glatten gasdichten Oberfläche führt, die so unter anderem auch eine geringere Verschmutzungsanfälligkeit der Oberfläche zur Folge hat.

Wird die Wärmeeinbringung in die PTFE-Vlies-Dichtungsbahn beim Durchlaufen der Walzen erhöht, z.B. durch eine langsamere Bahngeschwindigkeit und gleichzeitig ein erhöhter Druck auf die PTFE-Vliesbahn durch die Walzen ausgeübt, so ist es auch möglich die PTFE-Vliesbahn quasi kontinuierlich durchzusintern. Durch einen entsprechend hohen Druck ist es auf diese Art und Weise auch möglich mehrere (vorzugsweise 2 bis 10) dieser PTFE-Vliesbahnen zu einem Vliesverbund zusammenzulaminieren. Dies z.B. um unterschiedlich verdichtete oder dicke PTFE-Vliesstoffbahnen bzw. PTFE-Vliesstoffbahnen die mit unterschiedlichen PTFE-Imprägnierungen hergestellt wurden, zusammenzulaminieren.

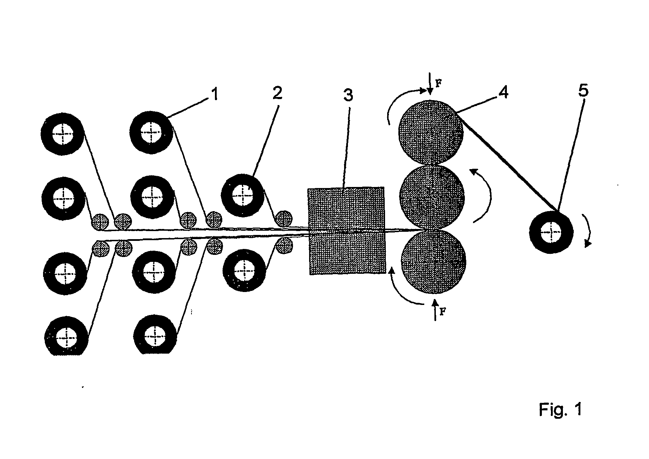

Es zeigt
- Fig. 1: eine Vorrichtung zur Herstellung von Flachdichtungen

Die Laminieranlage setzt sich hierbei im Einzelnen aus den auf Breitstreckrollen 2 mit dazugehörigen Spann- und Bremsvorrichtungen aufgewickelten PTFE-imprägnierten Vliesbahnen 1 zusammen. Danach schließt sich eine Vorheizstrecke 3 an, bei der durch eine Beheizung der Warmluftkammer auf 30-400°C schon ein großer Wärmebetrag in die PTFE-Vliesbahn eingebracht wird.

Danach wird die zu verdichtende und zu glättende PTFE-Vliesbahn 1 oder die zu verbindenden und zu verdichtenden PTFE-Vliesbahnen 1 durch drei übereinanderangeordneten sich drehende Kalanderwalzen 4 kontinuierlich und über dreifaches Umlenken zwischen den Kalanderwalzen durch die Kalanderstrecke durchgefördert. Dabei beträgt die Bahngeschwindigkeit der PTFE-Vliesbahn 1 je nach gewünschter Verweildauer hierbei vorzugsweise zwischen 0,1 bis 2 m/min.

Die Walzen 4 werden hierbei auf Temperaturen zwischen 30 bis 300 °C beheizt.

Zur Verdichtung der PTFE-Vliesbahn 1, d.h. zur Druckeinbringung, kann der Spalt zwischen den Metallwalzen durch die voneinander unabhängige horizontale Verschiebbarkeit der Walzen quasi beliebig gewählt werden.
Vorzugsweise beträgt der Spalt zwischen den Walzen zwischen 95% und 50 % der Dicke der unverdichteten PTFE-Vliesbahn 1 bzw. zwischen 95% und 50 % der Gesamtdicke von mehrerer PTFE-Vliesbahnen 1, die sich aus der Summe der Einzelnen der miteinander zu verbindenden PTFE-Vliesbahnen 1 zusammensetzt.
Die so stark verdichtete und aufgeheizte eventuell zusammenlaminierte PTFE-Vliesbahn wird dann auf einer Kühlstrecke abgekühlt und anschließend auf einem Wickelbock 5 aufgerollt.

## Patentansprüche

1. Verfahren zur Herstellung einer imprägnierten Flachdichtung aus mindestens einer Vliesstoffschicht, die aus einem Flächengebilde aus asbestfreien Fasern oder Fasergemischen besteht und mit einem Polymer imprägniert ist, **dadurch gekennzeichnet, daß** man eine mechanisch verfestigte Faservliesstoffbahn mit einer wässrigen PTFE-Dispersion imprägniert, die getränkten Faservliesstoffbahn danach durch zwei Abquetschwalzen laufen läßt, anschließend in einem Trockenofen trocknet, sodann die entstandenen Vliesstoff-Bahnen in gewünschter Anzahl unter Druck und Wärme, die ausreicht, um eine Verdichtung zu bewirken, wobei die Vliesstoffbahnen vor der Verdichtung eine Dicke von kleiner 5 mm, vorzugsweise von 0,5 bis 5 mm, haben und eine Verdichtung um 5 bis 70% der Ausgangsdicke erfolgt, anschließend miteinander zur fertigen Flachdichtung laminiert.

2. Verfahren nach Anspruch 1, **dadurch gekennzeichnet, dass** die Trocknung der imprägnierten Vliesstoffbahn in einem Durchlaufofen bei einer Temperatur von 30 bis 300°C erfolgt.

3. Verfahren nach Anspruch 1 oder 2, **dadurch gekennzeichnet, daß** man das Laminieren der Vliesstoff-Bahnen aufeinander in einem beheizten Rollaminator oder in einer beheizten Doppelbandpresse durchführt und anschließend die Aushärtung in einem Trockenofen oder einer Trockenkammer vornimmt.

4. Verfahren nach einem der Ansprüche 1 bis 3, **dadurch gekennzeichnet, dass** die PTFE-Vliesbahn durch Wärme- und Druckeinwirkung beim Durchlauf der Walzen kontinuierlich gesintert wird.

5. Verfahren nach Anspruch 4, **dadurch gekennzeichnet, dass** 2 bis 10 PTFE-Vliesbahnen zu einem Vliesverbund zusammenlaminiert werden.

6. Verfahren nach den Ansprüchen 1 - 5, **dadurch gekennzeichnet, dass** ein Vliesstoff, der aus Fasern oder Fasermischungen aus Polyimid (PI), Polybenzinidazol (PBI), Polyester (PES), Glasfasern (GF), Aramidfasem (AF) oder Basaltfasern besteht, verwendet wird.

7. Verfahren nach Anspruch 6, **dadurch gekennzeichnet, dass** ein Vliesstoff, der aus Aramidfasern besteht, verwendet wird.

8. Verfahren nach den Ansprüche 1 bis 7, **dadurch gekennzeichnet, dass** die eingesetzte PTFE-Dispersion anorganische Füllstoffe enthält.

9. Verfahren nach Anspruch 8, **dadurch gekennzeichnet, dass** die eingesetzte PTFE-Dispersion bis zu 50 Gew.% Graphit, Talkum, Glimmer oder Molybdandisulfid, bezogen auf die Trockenmasse an PTFE, als anorganischen Füllstoff enthält.

10. Verfahren nach den Ansprüche 1 bis 9, **dadurch gekennzeichnet, dass** der eingesetzte Vliesstoff ein mechanisch gebundener Vliesstoff mit einer Faserlänge von 2 bis 100 mm, insbesondere von 3 bis 20 mm, und einem Flächengewicht von 20 bis 500 g/m² ist.

11. Verfahren nach Anspruch 10, **dadurch gekennzeichnet, dass** das die mechanische Bindung des Vliesstoffs durch Wasserstrahlverfestigung oder Nadeln durchgeführt wird.

12. Verfahren nach den Ansprüchen 1 bis 11, **dadurch gekennzeichnet, daß** man zwischen zwei Vliesstoff-Bahnen eine Kunststoff- oder Metallfolie laminiert.

13. Verfahren nach Anspruch 12, **dadurch gekennzeichnet, daß** man vor dem Laminieren jeweils die Vliesstoff-Bahnen und die Kunststoff- oder Metallfolie getrennt voneinander zu ihrer bestimmungsgemäßen Endform vorkonturiert.

## Claims

1. Method for producing an impregnated flat seal from at least one nonwoven fabric layer which is composed of a sheetlike structure made from asbestos-free fibres or fibre mixtures and is impregnated with a polymer, **characterized in that** a mechanically hardened fibrous nonwoven fabric web is impregnated with an aqueous PTFE dispersion, the saturated fibrous nonwoven fabric web is then run through two squeezing rollers, is dried in a drying oven, then a desired number of the resulting nonwoven fabric webs are subsequently laminated with one another, under sufficient pressure and heat to cause sealing, with the nonwoven fabric webs having a thickness of less than 5 mm, preferably from 0.5 mm to 5 mm, before compaction and with a compaction taking place by 5 to 70 % of the initial thickness, to form the finished flat seal.

2. Method according to Claim 1, **characterized in that** the impregnated nonwoven fabric web is dried in a tunnel oven at a temperature of 30 to 300°C.

3. Method according to Claim 1 or 2, **characterized in that** the nonwoven fabric webs are laminated with one another in a heated roll laminator or in a heated double band press, and the hardening process takes place in a drying oven or in a drying chamber.

4. Method according to one of Claims 1 to 3, **characterized in that** the PTFE nonwoven fabric web is continuously sintered by the action of heat and pressure as it passes through the rollers.

5. Method according to Claim 4, **characterized in that** 2 to 10 PTFE nonwoven webs are laminated together to form a nonwoven composite.

6. Method according to one of Claims 1 to 5, **characterized in that** a nonwoven fabric composed of fibres or fibre mixtures of polyimide (PI), polybenzimidazole (PBI), polyester (PES), glass fibres (GF), aramid fibres (AF) or basalt fibres is used.

7. Method according to Claim 6, **characterized in that** a nonwoven fabric composed of aramid fibres is used.

8. Method according to one of Claims 1 to 7, **characterized in that** the PTFE dispersion used contains inorganic fillers.

9. Method according to Claim 8, **characterized in that** the PTFE dispersion used contains up to 50% by weight of graphite, talc, mica or molybdenum disulphide, relative to the dry mass of PTFE, as inorganic filler.

10. Method according to one of Claims 1 to 9, **characterized in that** the nonwoven fabric used is a mechanically bonded nonwoven fabric having a fibre length of 2 to 100 mm, in particular 3 to 20 mm, and a mass per unit area of 20 to 500 g/m².

11. Method according to Claim 10, **characterized in that** the nonwoven fabric is mechanically bonded by means of hydroentanglement or by means of needles.

12. Method according to one of Claims 1 to 11, **characterized in that** a plastic or metal film is laminated between two nonwoven fabric webs.

13. Method according to Claim 12, **characterized in that**, before lamination, the nonwoven fabric web and the plastic or metal film are each pre-contoured separately from one another into their intended final shape.

## Revendications

1. Procédé pour fabriquer une garniture d'étanchéité plate imprégnée en au moins une couche d'étoffe nappée, qui se compose d'un produit plat en fibres ou en mélanges de fibres sans amiante et est imprégnée avec un polymère, **caractérisé en ce que** l'on imprègne une bande de non-tissé consolidée mécaniquement avec une dispersion aqueuse de PTFE, on fait ensuite circuler la bande de non-tissé imprégnée à travers deux cylindres d'essorage, puis on la sèche dans un four de séchage, puis on lamine les bandes d'étoffe nappées obtenues les unes avec les autres en un nombre souhaité avec une pression et une chaleur qui suffit pour provoquer une compression, dans laquelle les bandes d'étoffe nappées présentent avant la compression une épaisseur de moins de 5 mm, de préférence de 0,5 à 5 mm, et subissent une compression de 5 à 70 % de l'épaisseur initiale, pour former ensuite la garniture d'étanchéité plate terminée.

2. Procédé selon la revendication 1, **caractérisé en ce que** le séchage de la bande d'étoffe nappée imprégnée est effectué dans un four continu à une température de 30 à 300°C.

3. Procédé selon la revendication 1 ou 2, **caractérisé en ce que** l'on effectue le laminage des bandes d'étoffe nappée l'une sur l'autre dans un laminoir à cylindres chauffé ou dans une presse à double bande chauffée et ensuite on réalise le durcissement dans un four de séchage ou une chambre de séchage.

4. Procédé selon l'une quelconque des revendications 1 à 3, **caractérisé en ce que** la bande d'étoffe au PTFE est frittée en continu par l'action de la chaleur et de la pression pendant son passage entre les cylindres.

5. Procédé selon la revendication 4, **caractérisé en ce qu'**on lamine ensemble de 2 à 10 bandes d'étoffe au PTFE en une étoffe composite.

6. Procédé selon les revendications 1 - 5, **caractérisé en ce que** l'on utilise une étoffe nappée qui est composée de fibres ou de mélanges de fibres en polyimide (PI), polybenzinidazol (PBI), polyester (PES), fibres de verre (FV), fibres d'aramide (AF) ou fibres de basalte.

7. Procédé selon la revendication 6, **caractérisé en ce que** l'on utilise une étoffe nappée qui est composée de fibres d'aramide.

8. Procédé selon les revendications 1 à 7, **caractérisé en ce que** la dispersion de PTFE utilisée contient des charges minérales.

9. Procédé selon la revendication 8, **caractérisé en ce que** la dispersion de PTFE utilisée contient jusqu'à 50 % en poids de graphite, de talc, de mica ou de bisulfure de molybdène, par rapport à la masse sèche de PTFE, comme charge minérale.

10. Procédé selon les revendications 1 à 9, **caractérisé en ce que** l'étoffe nappée utilisée est une étoffe nappée liée mécaniquement avec une longueur de fibres de 2 à 100 mm, en particulier de 3 à 20 mm, et un grammage de 20 à 500 g/m².

11. Procédé selon la revendication 10, **caractérisé en ce que** la liaison mécanique de l'étoffe nappée est effectuée par consolidation au jet d'eau ou par aiguilletage.

12. Procédé selon les revendications 1 à 11, **caractérisé en ce qu'**on lamine une feuille de plastique ou de métal entre deux bandes d'étoffe nappée.

13. Procédé selon la revendication 12, **caractérisé en ce que** l'on découpe respectivement les bandes d'étoffe nappée et la feuille de plastique ou de métal séparément l'une de l'autre à leur forme finale conforme à leur destination, avant le laminage.
